# EUROPÄISCHE PATENTSCHRIFT

(11) **EP 1 373 154 B1**
(45) Veröffentlichungstag und Bekanntmachung des Hinweises auf die Patenterteilung: **28.07.2004**
(21) Anmeldenummer: 02714142.3
(22) Anmeldetag: 02.02.2002
(51) Int. Cl.: C03C 1/00, C03C 13/00

(54) **HERSTELLUNG VON MINERALWOLLE**
PRODUCTION OF MINERAL WOOL
PRODUCTION DE LAINE MINERALE

(30) Priorität: 26.03.2001 DE 10114985
(43) Veröffentlichungstag der Anmeldung: 02.01.2004
(73) Patentinhaber: Noack, Hans-Peter, 44797 Bochum (DE)
(72) Erfinder: Noack, Hans-Peter, 44797 Bochum (DE)
(74) Vertreter: Behrendt, Arne, Dipl.-Ing.
(86) Internationale Anmeldenummer: PCT/EP2002/001083
(87) Internationale Veröffentlichungsnummer: WO 2002/076898

(56) Entgegenhaltungen:
- WO-A-98/45215
- GB-A- 2 170 496
- US-A- 5 198 190
- SHARDAKOV N T ET AL: "USE OF SPENT CATALYSTS FOR SYNTHESIS OF UNDERCOAT ENAMELS" GLASS AND CERAMICS, CONSULTANTS BUREAU. NEW YORK, US, Bd. 52, Nr. 5/6, 1. Mai 1995 (1995-05-01), Seiten 135-136, XP000559469 ISSN: 0361-7610
- KROKHIN V P ET AL: "USE OF PETROCHEMICAL WASTE IN THE GLASS INDUSTRY" GLASS AND CERAMICS, CONSULTANTS BUREAU. NEW YORK, US, Bd. 53, Nr. 5/6, 1. Mai 1996 (1996-05-01), Seiten 180-181, XP000680219 ISSN: 0361-7610

## Beschreibung

Die Erfindung betrifft ein Verfahren zur Herstellung von Mineralwolle, wobei ausgehend von einer viskosen mineralischen Schmelze, die Silizium- und Metalloxide enthält, Fasern erzeugt werden, die dann zu einem Wollvlies weiterverarbeitet werden.

Mineralwolle gehört zu den meist genutzten Materialien für den Wärme-, Schallund Brandschutz. Dies beruht darauf, daß Mineralwolle einerseits hervorragende Dämmeigenschaften besitzt und andererseits nicht brennbar (Schmelzpunkt über 1000°C), wasserabweisend, alterungsbeständig und leicht zu verarbeiten ist.

Die Grundrnaterialien für Mineralwolle bilden Gesteine, wie z. B. Basalt und Dolomit, sowie Quarzsand und andere mineralische Zuschlagsstoffe. Für die Herstellung werden die Grundmateriatien bei Temperaturen zwischen 1300°C und 1600°C eingeschmolzen. Anschließend wird die viskose Mineralschmelze zerfasert, was entweder mittels spezieller Zerfaserungsrotoren oder -walzen oder auch durch ein Düsenblasverfahren erfolgt. Den Fasern werden dann Binde- und gegebenenfalls Imprägniermittel zugesetzt, wonach eine Weiterverarbeitung zu einem Wollvlies erfolgt. Das Wollvlies wird dann verdichtet und zuletzt bei Temperaturen von 200°C bis zu 250°C ausgehärtet. Die Endprodukte sind üblicherweise Dämmplatten für Wärmeisolierung, Schallschutz und Brandschutz.

Die WO 96/14274 betrifft ein Verfahren zur Herstellung von Mineralwolle, bei dem die mineralische Ausgangsschmelze einen hohen Anteil an Aluminiumoxid (Al₂O₃) enthält. Die nach dem vorbekannten Verfahren hergestellten Mineralfasem haben den Vorteil, daß diese zwar haltbar aber trotzdem biologisch abbaubar sind, wenn die Fasern vom Menschen über die Atemwege aufgenommen werden. Durch den hohen Aluminiumoxidanteil haben die Mineralfasern eine hohe Alkalibeständigkeit, was sich positiv auf die Haltbarkeit in feuchter Umgebung und die Widerstandsfähigkeit gegen Witterungseinflüsse auswirkt. Durch den hohen Aluminiumoxidanteil wird gleichzeitig die Verarbeitbarkeit der Fasern verbessert, weil dadurch die Viskosität der Ausgangsschmelze erhöht wird.

Als Aluminiumoxid-Quelle werden üblicherweise natürlich vorkommende Materialien eingesetzt. Hier sind insbesondere Bauxit und Korund zu nennen. Diese Materialien werden aus dem Abbau der natürlichen Lagerstätten gewonnen. Ein großer Teil dieser Lagerstätten ist bereits heute weitgehend ausgebeutet. Aufgrund der Knappheit dieser Rohstoffe und aufgrund der hohen Transportkosten, welche mit der Ausbeutung von entlegenen Lagerstätten verbunden sind, ist der Einsatz natürlich vorkommender Mineralien als Aluminiumoxid-Quelle nachteiligerweise sehr teuer.

Die WO 85/01498 schlägt vor, für die Herstellung von Glas- bzw. Mineralfasern natürlich vorkommende Zeolithe als Silizium- und Aluminiumoxid-Quelle zu verwenden. Nachteiligerweise ist jedoch der Aluminiumoxid-Gehalt von natürlich vorkommenden Zeolithen vergleichsweise niedrig, so daß es für die Herstellung der Fasern erforderlich ist, weiteres Aluminiumoxid zuzusetzen, um die gewünschten Eigenschaften, insbesondere hohe Alkalibeständigkeit und gute Verarbeitbarkeit der Schmelze zu Fasern, zu erhalten. Zudem stellt die Verwendung von natürlichen Zeolithen als Ersatz für andere Alumiumoxid-Materialien aus wirtschaftlichen Gründen keine Alternative dar.

Die WO 98/45215 betrifft ein Verfahren zum Herstellen von Mineralwolle, bei welchem Schlacken, wie z.B. Müllschlacken, Schlacken aus der Verbrennung von beim Schreddem von Altautos anfallendem Müll oder Schlacken aus der Nichteisen-Metallurgie, als Ausgangsstoff eingesetzt werden. Derartige Schlacken haben zwar offenbar einen hohen SiO₂-Gehalt, der Gehalt an Al₂O₃ reicht jedoch für die Herstellung von Mineralwolle nicht aus. Deswegen wird in der genannten Druckschrift vorgeschlagen, zur Erhöhung des Al₂O₃-Gehalts der Schlacke beispielsweise zerkleinerte Gebrauchtkatalysatoren, nämlich Entstickungskatalysatoren, die einen hohen Al₂O₃-Gehalt aufweisen, zuzusetzen. Nachteiligerweise haben die gemäß dem vorbekannten Vefahren eingesetzten Schlacken und Gebrauchtkatalysatoren eine für die Mineralwolleerzeugung zunächst ungünstige Zusammensetzung. Es ist daher erforderlich, vor der eigentlichen Fasererzeugung die so gebildeten Schlacken über einem Metallbad zur Reduktion der Metalloxide zu reduzieren. Das vorbekannte Herstellungsverfahren ist dadurch aufwendig und entsprechend teuer.

Davon ausgehend liegt der vorliegenden Erfindung die Aufgabe zugrunde, das eingangs beschriebene Verfahren zur Herstellung von Mineralwolle dahingehend zu verbessern, daß die Herstellungs- und Rohstoffkosten reduziert werden und daß gleichzeitig natürtiche Ressourcen geschont werden.

Diese Aufgabe wird ausgehend von einem Verfahren der eingangs genannten Art dadurch gelöst, daß der mineralischen Schmelze ein verbrauchtes Aluminiumsilikat-Katalysatormaterial zugesetzt wird, das wenigstens 40 Gew.-% Aluminiumoxid und wenigstens 40 Gew.-% Siliziumoxid enthält, sowie Magnesiumoxid mit einem Anteil von bis zu 5 Gew.-% und Natrium- und/oder Kaliumoxid mit einem Anteil von bis zu 5 Gew.-%.

Gemäß der Erfindung wird zunächst eine Mischung aus natürlich vorkommenden Gesteinen wie Diabas, Basalt, Dolomit und Quarzsand mit dem mehr als 40 Gew.-% Aluminiumoxid und mehr als 40 Gew.-% Siliziumoxid enthaltenden Katalysatormaterial hergestellt. Diese Mischung wird dann, beispielsweise in einem Kupolofen, in eine Schmelze umgewandelt. Üblich ist es auch, die einzelnen Komponenten zunächst mit einem Bindemittel und Wasser zu Klinkern zu binden und diese dann getrocknet der Schmelze zuzugeben. Als Bindemittel kommen übliche Zementsorten in Frage, beispielsweise schnelibindender Portiandzement, aber auch Asche aus der Verbrennung von Deinking-Rückständen der Altpapieraufbereitung, die einen hohen Mineralstoffgehalt haben. Die Klinker enthalten zumeist 8 bis 20 Gew.-% Bindemittel, nach dem Trocknen. Mit der erfindungsgemäßen Mischung kann vorteilhafterweise problemlos erreicht werden, daß die Liquidus-Temperatur der Schmelze im Bereich von etwa 1400°C liegt, wobei die Schmelze eine zur Fasererzeugung geeignete Viskosität hat. Bei Bedarf kann die Viskosität der Schmelze durch Zusatz von Erdalkalimetalloxiden gesenkt werden.

Die resultierenden Fasern haben einen hohen Aluminiumoxidgehalt im Bereich von etwa 20 Gew.-%. Dadurch sind vorteilhafte Eigenschaften der Fasern bedingt, wie gute Haltbarkeit und Beständigkeit gegen Feuchtigkeit, hohe Alkaliresistenz und gute biologische Abbaubarkeit im leicht sauren pH-Bereich.

Ein im Sinne der Erfindung geeignetes pulverförmiges Aluminiumsilikat-Katalysatormaterial mit hohem Al₂O₃-Gehalt fällt in großen Mengen als Abfallstoff in der chemischen Industrie an. Es handelt sich hierbei vor allem um verbrauchte Cracking-Katalysatoren, die bei der Herstellung von Benzin aus Rohöl eingesetzt werden. Die Aluminiumsilikat-Katalysatoren können, gegebenenfalls nach einer vorherigen Aufbereitung durch Homogenisieren, zu geringen Kosten für die Mineralwolle-Herstellung bereitgestellt werden, wodurch der Einsatz von natürlichen Aluminiumoxid-Mineralien zum großen Teil ersetzt werden kann. Es werden also gleichzeitig wertvolle Rohstoffe, wie beispielsweise Bauxit, eingespart und gleichzeitig große Mengen von Abfallstoffen einer sinnvollen Verwendung zugeführt.

Zur erfindungsgemäßen Herstellung von Mineralwolie geeignete Aluminiumsilikat-Katalysatoren, die in der Petrochemie zum Cracken von Kohlenwasserstoff verwendet werden, bestehen zu etwa gleichen Teilen aus Siliziumoxid und Aluminiumoxid. Sie enthalten wenigstens 40 Gew.-% Aluminiumoxid und ebenfalls wenigstens 40 Gew.-% Siliziumoxid. Die übrigen Bestandteile, die in solchen Materialien üblicherweise enthalten sind, stören bei der Mineralwolle-Herstellung nicht, haben im Gegenteil sogar positive Auswirkungen auf die Eigenschaften der mineralischen Schmelze. Vorteilhaft ist daß das gemäß der Erfindung zugesetzte Aluminiumsilikat-Katalysatormaterial bis zu 5 Gew.-% Magnesiumoxid enthält. Geringe Menge von Magnesiumoxid reduzieren die Kristallisationstendenz der Schmelze, was vorteilhaft für die Faserherstellung ist.

Vorteilhaft ist es weiter, daß das gemäß der Erfindung zugesetzte Aluminiumsilikat-Katalysatormaterial bis zu 5 Gew.-% Natrium- und/oder Kaliumoxid enthält. Der Zusatz von Alkalioxiden führt insgesamt zu einer Herabsetzung der Schmelztemperatur der Ausgangsmischung, wodurch Energiekosten eingespart werden.

Üblicherweise enthalten die in der chemischen Industrie anfallenden Katalysator-Abfälle bis zu 1 Gew.-% Titanoxid. Geringe Anteile von Titanoxid führen vorteilhafterweise zu einer weiter verbesserten Alkaliresistenz der erzeugten Fasern.

Vorteilhaft ist auch der Gehalt bis zu 5 Gew.-% Selten-Erd-Oxiden, der bei den in der Petrochemie eingesetzten Aluminiumsitikat-Katalysatoren üblich ist. Es zeigt sich, daß sich kleine Menge von Lanthanoxid positiv auf die Eigenschaften der Schmelze wie auch der hergestellten Fasern auswirken.

In der Regel handelt es sich bei dem gemäß der Erfindung der mineralischen Schmelze zugesetzten Aluminiumsilikat-Katalysatormaterial um ein synthetisches Zeolithpulver. Bei den üblichen Cracking-Katalysatoren handelt es sich nämlich um synthetische Zeolithe mit einem vergleichsweise hohen Al₂O₃-Gehalt. In der porösen Kristallstruktur der Zeolithe sind als aktive Zentren Lanthanide enthalten. Der Einsatz von Zeolithpulver hat, abgesehen von dem hohen Aluminiumoxid-Gehalt, eine Reihe von weiteren Vorteilen. Einerseits liegt in den Zeolithen eine gute chemische Durchmischung der Bestandteile vor, wodurch die Homogenität der Glassschmelze und die Reproduzierbarkeit bei der Faserherstellung begünstigt wird. Andererseits enthalten die Zeolithe nennenswerte Anteile von adsorbiertem Wasser. Die Materialien sind stark hygroskopisch und liegen üblicherweise in hydratisierter Form vor. Hydratisierte kristalline Materialien tendieren in der Regel dazu, bei vergleichsweise niedrigen Temperaturen zu schmelzen. Die Erniedrigung der Schmelztemperatur ist insbesondere bei der Herstellung von Mineralwolle wünschenswert, um Energiekosten zu sparen.

Zweckmäßigerweise wird das Zeolithpulver vor dem Zusatz zu der mineralischen Schmelze einer Vorbehandlung durch Kalzinierung unterzogen. Insbesondere wenn das Zeolithpulver als Abfall aus der Chemieindustrie stammt, ist eine derartige Vorbehandlung empfehlenswert, um die in dem Material verbliebenen Kohlenwasserstoffreste zu entfernen.

Vorteilhafterweise beträgt die Partikelgröße bei dem gemäß der Erfindung eingesetzten Zeolithpulver weniger als 100 µm. Ein derartig feinkörniges Pulvermaterial läßt sich besonders leicht mit den übrigen Ausgangsstoffen vermischen und aufschmelzen.

Wenn es sich bei dem Zeolithpulver um Zeolith A, X, Y oder ZSM handelt, ist ein besonders hoher Anteil von Aluminiumoxid sichergestellt. Vorzugsweise werden die genannten Zeolithe, bei denen das Silizium-zu-Aluminium-Verhältnis zwischen 1 und 5 liegt, großtechnisch in der chemischen Industrie eingesetzt.

Als Ausführungsbeispiel der Erfindung ist in der folgenden Tabelle die Zusammensetzung eines Aluminiumsilikat-Katalysatormaterials angegeben, bei dem es sich um einen Cracking-Katalysator handelt, wie er üblicherweise in der chemischen Industrie zum Einsatz kommt:

| | Gew.-% |
|---|---|
| Al₂O₃ | 45,2 |
| SiO₂ | 46,4 |
| TiO₂ | 1,7 |
| MgO | 0,01 |
| CaO | 0,01 |
| K₂O | 0,03 |
| CeO₂ | 0,01 |
| La₂O₃ | 1,60 |
| Nd₂O₃ | 0,03 |
| Pr₆O ₁₁ | 0,14 |

Ein besonders geeignetes Bindemittel ist ein Portland-Normzement nach DIN 1164 mit einem Zuschlag an Elektrofilterasche, CEM-Rock 488 der Firma Anneliese Baustoffe in Ennigerloh, Deutschland.

## Patentansprüche

1. Verfahren zur Herstellung von Mineralwolle, wobei ausgehend von einer viskosen mineralischen Schmelze, die Silizium- und Metalloxide enthält, Fasern erzeugt werden, die dann zu einem Wollvlies weiterverarbeitet werden, **dadurch gekennzeichnet, daß** der mineralischen Schmelze ein verbrauchtes Aluminiumsilikat-Katalysatormaterial zugesetzt wird, das wenigstens 40 Gew.-% Aluminiumoxid und wenigstens 40 Gew.-% Siliziumoxid enthält, sowie Magnesiumoxid mit einem Anteil von bis zu 5 Gew.-% und Natrium- und/oder Kaliumoxid mit einem Anteil von bis zu 5 Gew.-%.

2. Verfahren nach Anspruch 1, **dadurch gekennzeichnet, daß** das zugesetzte Aluminiumsilikat-Katalysatormaterial bis zu 1 Gew.-% Titanoxid enthält.

3. Verfahren nach Anspruch 1, **dadurch gekennzeichnet, daß** das zugesetzte Aluminiumsilikat-Katalysatormaterial bis zu 5 Gew.-% Seiten-Erd-Oxide, insbesondere Lanthanoxid enthält.

4. Verfahren nach Anspruch 1, **dadurch gekennzeichnet, daß** es sich bei dem zugesetzten Aluminiumsilikat-Katalysatormaterial um ein synthetisches Zeolithpulver handelt.

5. Verfahren nach Anspruch 4, **dadurch gekennzeichnet, daß** das Zeolithpulver vor dem Zusatz zu der mineralischen Schmelze einer Vorbehandlung durch Kalzinierung unterzogen wird.

6. Verfahren nach Anspruch 4, **dadurch gekennzeichnet, daß** die Partikelgröße des Zeolithpulvers weniger als 100 µm beträgt.

7. Verfahren nach Anspruch 3, **dadurch gekennzeichnet, daß** das Zeolithpulver Zeolith A, X, Y oder ZSM enthält.

8. Verwendung von pulverförmigem Cracking-Katalysator mit einem Aluminiumoxid-Gehalt wenigstens 40 Gew.-%, einem Siliziumoxid-Gehalt von wenigstens 40 Gew.-%, einem Magnesiumoxid-Gehalt von bis zu 5 Gew.-% und einem Natrium- und/oder Kaliumoxid-Gehalt von bis zu 5 Gew.-% für die Mineralwolle-Herstellung.

## Claims

1. A method of producing mineral wool, wherein fibres are produced starting from a viscous mineral melt which contains silicon and metal oxides, the fibres then being further processed to form a non-woven wool material, **characterised in that** added to the mineral melt is a spent aluminium silicate catalyst material which contains at least 40% by weight of aluminium oxide and at least 40% by weight of silicon oxide, as well as magnesium oxide with a proportion of up to 5% by weight and sodium and/or potassium oxide with a proportion of up to 5% by weight.

2. A method according to claim 1 **characterised in that** the added aluminium silicate catalyst material contains up to 1% by weight of titanium oxide.

3. A method according to claim 1 **characterised in that** the added aluminium silicate catalyst material contains up to 5% by weight of rare earth oxides, in particular lanthanum oxide.

4. A method according to claim 1 **characterised in that** the added aluminium silicate catalyst material is a synthetic zeolite powder.

5. A method according to claim 4 **characterised in that** prior to the addition to the mineral melt the zeolite powder is subjected to a preliminary treatment by calcination.

6. A method according to claim 4 **characterised in that** the particle size of the zeolite powder is less than 100 µm.

7. A method according to claim 3 **characterised in that** the zeolite powder contains zeolite A, X, Y or ZSM.

8. Use of cracking catalyst in powder form with an aluminium oxide content of at least 40% by weight, a silicon oxide content of at least 40% by weight, a magnesium oxide content of up to 5% by weight and a sodium and/or potassium content of up to 5% by weight for the production of mineral wool.

## Revendications

1. Procédé pour la production de laine minérale où, en partant d'une masse fondue minérale visqueuse qui contient des oxydes de silicium et de métal, on produit des fibres qui alors sont traitées en un non tissé de laine, **caractérisé en ce qu'**à la masse fondue minérale est ajouté un matériau catalyseur de silicate d'aluminium usé qui contient au moins 40% en poids d'oxyde d'aluminium et au moins 40% en poids d'oxyde de silicium ainsi que de l'oxyde de magnésium avec une proportion pouvant atteindre 5% en poids et de l'oxyde de sodium et/ou potassium à une proportion pouvant atteindre 5% en poids.

2. Procédé selon la revendication 1 **caractérisé en ce que** le matériau catalyseur de silicate d'aluminium ajouté contient jusqu'à 1% en poids d'oxyde de titane.

3. Procédé selon la revendication 1, **caractérisé en ce que** le matériau catalyseur de silicate d'aluminium ajouté contient jusqu'à 5% en poids d'oxyde de terres rares, en particulier d'oxyde de lanthane.

4. Procédé selon la revendication 1, **caractérisé en ce qu'**il s'agit, dans le cas du matériau catalyseur de silicate d'aluminium ajouté, d'une poudre de zéolithe synthétique.

5. Procédé selon la revendication 4, **caractérisé en ce que** la poudre de zéolithe est soumise, avant addition à la masse fondue minérale, à un pré-traitement par calcination.

6. Procédé selon la revendication 4, **caractérisé en ce que** la grandeur des particules de la poudre de zéolithe est de moins de 100 µm.

7. Procédé selon la revendication 3, **caractérisé en ce que** la poudre de zéolithe contient de la zéolithe A,X,Y ou ZSM.

8. Utilisation d'un catalyseur de craquage en poudre avec une teneur en oxyde d'aluminium d'au moins 40% en poids, une teneur en oxyde de silicium d'au moins 40% en poids, une teneur en oxyde de magnésium pouvant atteindre 5% en poids et une teneur en oxyde de sodium et/ou potassium pouvant atteindre 5% en poids, pour la production de laine minérale.
